# EUROPEAN PATENT SPECIFICATION

(11) **EP 2 647 417 B1**
(45) Date of publication and mention of the grant of the patent: **03.01.2018**
(21) Application number: 12163040.4
(22) Date of filing: 03.04.2012
(51) Int. Cl.: B01D 53/26, B01D 53/04, B60T 17/00, B60H 3/02

(54) **Air dryer device**
Lufttrocknervorrichtung
Dispositif de séchage à l'air

(43) Date of publication of application: 09.10.2013
(73) Proprietor: KNORR-BREMSE Systeme für Nutzfahrzeuge GmbH, 80809 München (DE)
(72) Inventor: Krabot, Matyas, 2310 Szigetszentmiklós (HU)
(74) Representative: Schumacher & Willsau

(56) References cited:
- EP-A1- 2 123 343
- EP-A2- 0 088 905
- DE-A1-102008 012 699
- US-A- 4 816 043

## Description

The present invention pertains to an air dryer device.

EP 2 123 343 A1 describes an air heater device according to the preamble of claim 1.

For many modern systems, it is necessary to provide dried air, which may be pressurized air. For example, dried air is used in food processing. Dried air is also of particular relevance for modern vehicles such as utility vehicles or trains, in which pressurized air is used to power important systems like brakes or suspensions. To avoid moisture damaging the pneumatic systems using the air, an air dryer device is usually provided to extract moisture and possibly other undesired elements, i.e., particulate elements, from an air stream. An air dryer usually comprises an air dryer cartridge in which a dryer agent is arranged, and may also include a valve housing comprising valves and connection ports as well as an electronic control unit. The dryer agent extracts water from an air flow. Extracted water is usually retained in the dryer agent, and it is required to rid the dryer agent of retained water now and again. For this purpose, air dryer devices usually comprise a so-called regeneration mode or regeneration function in which an air flow direction is reversed, and dry air is streamed through the moist dryer agent. The dry air removes water from the dryer agent, so that the air dryer device functions with increased efficiency after regeneration.

DE 10 2008 012 699 A1 describes an air dryer device comprising an electronic control unit that is arranged in an air dryer cartridge.

US 4,816,043 describes a twin tower fractionating apparatus that can be used to remove water from a pressurized air stream. It comprises temperature sensors in the desiccant beds and a measured temperature gradient is the basis to switch between different operational modes.

An object of the present invention is to provide an air dryer device in which the efficiency of an air dryer device, in particular the dryer agent, and/or the efficiency of a regeneration mode may be increased.

The present invention pertains to an air dryer device, in particular for a vehicle, comprising an air dryer cartridge with a housing, the housing containing a dryer agent, as well as first air port providing fluid connection to the housing and a second air port providing fluid connection to the housing. The air dryer cartridge comprises a fluid guide providing a fluid connection between the first air port and the second air port, the fluid guide being arranged to allow interaction between an air stream flowing through the fluid guide and the dryer agent. The air dryer device further comprises a temperature sensor device adapted to monitor a temperature change due to an interaction between the air stream and the dryer agent. It has been recognized that the interaction of an air stream with the dryer agent, in particular depositing water to the dryer agent or removing water from the dryer agent, is an enthalpic reaction. For example, depositing water onto a dryer agent may be an exothermal reaction, raising the temperature of the air stream, the dryer agent, and possibly components in close physical contact thereof. In particular, the adsorption of water by a dryer agent and condensation of water onto a dryer agent are exothermal reactions. On the other hand, removing water from a dryer agent may require heat, and thus may be an endothermal reaction. Desorption of water from a dryer agent may be seen as an example of such an endothermal reaction. Generally, the interaction of an air stream with a dryer agent requires or produces heat until an equilibrium or saturation is reached, in which essentially no further net deposition or removal of water occurs. In the context of this description, an air dryer device may be connected or connectable to a compressor providing air, in particular pressurized air. It may be considered that an air dryer device comprises one or more valves and or ports. It may also comprise one or more sensors, e.g., pressure sensors, and may comprise or be connected or connectable to an electronic control unit. An air dryer device may be connected to an air storage device and/or a consumer system to be provided with dried air. In particular, the first air port may be directly or indirectly connected or connectable to a compressor, and/or the second air port may be directly or indirectly connected or connectable to an air storage or a consumer system. A fluid connection may be seen as a connection enabling a fluid, in particular air, to flow between connected elements or components. A fluid guide may generally provide a channel or hollow space through which a fluid may flow. It may be considered that a fluid guide is arranged inside a housing of an air dryer cartridge. The fluid guide may comprise a space in which dryer agent is arranged. It may be adapted to guide an air stream to contact particles or elements of the dryer agent when flowing through the fluid guide. An air dryer cartridge may generally be detachably or non-detachably connected to the air dryer device. As such, it may be a separate part or an integral part of the air dryer device. In particular, the air dryer cartridge may comprise the first air port, which may be in fluid connection with a corresponding port of the air dryer device, and the second air port, which also may be in fluid connection with a corresponding connection port. Interaction of an air stream with the dryer agent may refer to the air stream flowing in contact with elements of the dryer agent such that water and/or moisture may be deposited onto the dryer agent or that the air stream may remove water and/or moisture from the dryer agent. A dryer agent may generally be a material adapted to extract water out of an air stream, e.g., via adsorption and/or condensation. The dryer agent may comprise particulate and/or granulate material. A dryer agent may comprise an adsorbent. For example, a dryer agent may comprise a molecular sieve, e.g., a zeolith material, or an aluminum-based material. It may be considered that deposition of water and/or moisture on a dryer agent is an exothermal reaction, whereas removal of water and/or moisture from the dryer agent may be an endothermal reaction. Monitoring a temperature change may comprise measuring and/or comparing several measured temperature values. A sensor device adapted to measure a temperature and provide signals based on which a temperature change can be determined is considered to be adapted to monitor a temperature change. A temperature sensor device comprises one or more temperature sensors. It may be considered that the temperature sensor device and/or sensors of the temperature sensor device are adapted to provide signals indicative of a temperature sensed and/or a temperature change. Generally, a temperature change is determined based on temperature measurements. In particular, a temperature change can be a spatial change in temperature, e.g., between different locations or different parts of an air stream, and/or a temporal change representing a change in temperature over time at one or more given locations. A temperature sensor device adapted to monitor a temperature change due to interaction between the air stream and the dryer agent is provided to comprise at least one temperature sensor arranged at the location in which it is able to detect a corresponding temperature change. One or more temperature sensors of the temperature sensor device are considered to be arranged inside the housing, in particular in contact with the air stream and/or the dryer agent. It is also be considered to arrange a sensor outside of the housing and/or the air dryer cartridge and/or in close proximity to the first air port or the second air port in the path of an air stream to be flowed through the air dryer cartridge. For example, one or more temperature sensors can be provided in a channel of a valve housing providing a fluid connection to the first air port and/or one or more temperature sensors can be provided in a channel of a valve housing providing a fluid connection to the second air port. Generally, a temperature sensor is a contact sensor or a noncontact sensor, e.g. an infrared sensor. An infrared sensor may, e.g., be arranged outside of the housing to detect changes in temperature of the housing indicative of a temperature change due to interaction between an air stream and the dryer agent. Generally, a temperature sensor device is adapted to monitor a spatial and/or temporal temperature change due to an interaction between the air stream and the dryer agent.

The air dryer device is arranged such that it comprises a first operational mode, in which air flows from the first air port to the second air port via the fluid guide, and that it comprises a second operational mode, in which air flows from the second air port to the first air port via the fluid guide. In both operational modes, an air stream flowing via the fluid guide interacts with the dryer agent. In particular, the first operational mode is a loading mode in which air to be dried is provided to the first air port, flows via the fluid guide through the dryer agent, interacts with the dryer agent, and then leaves the air dryer cartridge via the second air port. In this mode, air is dried when it interacts with the air dryer cartridge. The second operational mode represents a reverse flow of air. In particular, the second operational mode is a regeneration mode, in which dry air, e.g., from an air storage and/or a consumer system, flows through the dryer agent to remove water, e.g., due to desorption.

The temperature sensor device is connected to an electronic control unit. Generally, such a connection refers to a connection via which the temperature sensor device transmits and/or receives signals from the electronic control unit. The temperature sensor device is adapted to transmit signals representing a measured temperature and/or a temperature change to the electronic control unit. Accordingly, the electronic control unit is adapted to receive and/or process signals from the temperature sensor device.

The air dryer device is adapted to be controlled by an electronic control unit. This can improve the level of control and the efficiency of regeneration. The electronic control unit is adapted to control the first and/or second operational mode based on signals from the temperature sensor device. The electronic control unit is adapted to monitor whether the direction or sign of a temperature change stalls or changes, in particular during one of the operational modes. A stall or change in sign of a temperature change is considered to be indicative for the dryer agent having reached an equilibrium or saturation regarding deposition or removal of water in the current operational mode. Stalling refers to no essential change of temperature occurring over a predetermined time. A change in temperature change is represented by a temperature beginning to increase after decreasing or to decrease after increasing. For example, the electronic control unit is adapted to monitor whether in a first operational mode a temperature change changes from an increase in temperature to a decrease in temperature. The electronic control unit is adapted to monitor whether in a second operational mode a temperature change changes from a decrease in temperature to an increase in temperature. The electronic control unit is generally adapted to switch the air dryer device between operational modes when it detects a stall or change in the sign of the temperature change.

An electronic control unit is adapted to monitor and/or determine the temporal and/or spatial change of temperature based on signals from the temperature sensor device. The electronic control unit is adapted to control the air dryer device based on the monitored change. In particular, the electronic control unit is adapted to end a first operational mode when an increase in measured temperature stalls for a predetermined time or changes to a decrease. The electronic control unit is adapted to end a second operational mode, in particular a regeneration mode, when a decrease in temperature stalls for a predetermined time or changes to an increase. Generally, the electronic control unit is adapted to determine a local minimum or local maximum of the temperature. A local minimum is indicative of a regeneration mode reaching equilibrium or saturation. A local maximum is indicative of a loading mode reaching equilibrium or saturation. The electronic control unit is adapted to end an operational mode when it determines that equilibrium or saturation is reached and to switch to the other operational mode. The electronic control unit is adapted to determine a temperature difference between different locations and/or sensors, which is representative of a spatial temperature change. The electronic control unit is adapted to control the air dryer device based on this temperature difference. For example, it is adapted to determine whether a given temperature difference has been reached or check the temporal behavior of the temperature difference.

The electronic control unit is adapted to switch the air dryer device between the first operational mode and the second operational mode based on signals from the temperature sensor device. Switching between the first operational mode and the second operational mode is performed when the respective other mode is controlled to be ended.

The first operational mode is a loading mode in which the air dryer device is controlled to flow air to be dried through the air dryer cartridge, and the second operational mode is a regeneration mode. In the regeneration mode, the dry air may be controlled to flow through the air dryer cartridge to remove water and/or moisture from the dryer agent.

The temperature sensor device comprises at least one temperature sensor arranged in the housing and/or in contact with the dryer agent and/or in the path of an air stream entering or leaving the first air port and/or the second air port and/or in contact with the housing. It is considered to arrange at least one temperature sensor in the path of an air stream flowing through the first air port and/or a further temperature sensor in the path of an air stream flowing through the second air port. Such sensors can be arranged in close proximity to the respective air port. It is considered to provide one or more than one temperature sensors inside the housing of the air dryer cartridge. Alternatively or additionally, one or more temperature sensors are arranged outside of the cartridge and/or the housing of the cartridge, in particular in the flow path of an air stream close to at least one of the first air port and the second air port. Such an arrangement allows spatial monitoring of a temperature change such that, for example, it is determined whether the air flowing through the first air port is warmer or colder than the air flowing through the second air port due to an interaction of the air stream with the dryer agent. Generally, it is considered to provide two or more temperature sensors at different locations inside the housing, for example, in contact with the dryer agent. Accordingly, it is possible to determine locally at several positions whether saturation or equilibrium occurs.

In the context of this description, a vehicle can be a utility vehicle or a railway vehicle. A vehicle can comprise a pneumatic brake as a consumer of dry and/or pressurized air. An electronic control unit can be integrated into an air dryer device or may be arranged separately. A connection to transmit data or signals and/or receive data or signals, in particular to and/or from an electronic control unit, e.g. via a connection to the temperature sensor device, is provided via an electrical and/or optical cable and/or via radio and/or via a wireless connection. An electronic control unit is generally provided with signals from sensors, in particular from the temperature sensor device. It is adapted to control pneumatic and/or electropneumatic components, which are parts of the air dryer device and/or are connected to the air dryer device to control the air dryer device. In particular, controlling refers to initiating and/or ending a first operational mode and/or a second operational mode and/or switching between the first operational mode and the second operational mode. Controlling by an electronic control unit in particular refers to initiating a regeneration mode and/or a loading mode and/or ending a regeneration mode and/or loading mode. Generally, an electronic control unit is part of an air dryer device and/or a temperature sensor device or it is implemented separately. A sensor or sensor device is adapted to monitor a temperature change due to an interaction between the air stream and the dryer agent if it is arranged such that it monitors a location in heat conductive contact with the dryer agent or the air stream in which the temperature change due to the interaction is not overshadowed by other effects, e.g., heat produced by a compressor, cooling effects due to headwind, etc. The electronic control unit is adapted to receive a signal indicating an outside temperature and/or to control the air dryer device based on an outside temperature. The outside temperature represents an environmental temperature and/or a temperature outside of the housing of the air dryer cartridge. For this purpose, the electronic control unit is connected to a corresponding temperature sensor arranged to measure the outside temperature. It should be noted that monitoring the temperature change emphasizes relative temperature values but not absolute temperature values. The outside temperature generally has an influence on the exact behavior of a temperature change, but is not expected to change the general shape of a curve describing the behavior of a temperature and/or the temperature change. It should be understood that monitoring a temperature change as described herein can be useful for a plurality of purposes. It can be performed to monitor and control an air dryer device during operation. Further, an air dryer device is calibrated based on such monitoring. Generally, the electronic control unit is adapted to receive calibration data from a connected storage. The calibration data pertains to the behavior of the temperature change to be expected under different conditions, e.g., depending on outside temperatures, pressure conditions, duration periods of operation in a given operational mode, etc. It is determined the amount of air necessary for a regeneration mode to reach equilibrium and/or the amount of air to be dried until a loading mode reaches equilibrium. Based on these amounts, suitable amounts of air and/or operation durations are defined for a regeneration mode and/or a loading mode. In this context it is considered that the efficiency of a dryer agent is reduced even before reaching equilibrium, such that a maximum load of air to be dried is lower than the amount of air necessary to be dried to reach equilibrium. The electronic control unit is adapted to determine whether a regeneration started or ended based on monitoring the temperature change. This provides an easy approach to independently check for errors during the regeneration mode. The electronic control unit is adapted to determine a current state of regeneration based on monitoring the temperature change. It is considered that the electronic control unit is adapted to determine the current state based on an outside temperature and/or calibration data indicating the expected behavior of the temperature change under given conditions, which is stored in a memory. Alternatively or additionally, the electronic control unit is adapted to determine the efficiency of depositing water to the dryer agent, in particular the efficiency of adsorption, and/or removal of water from the dryer agent, in particular the desorption of water, based on monitoring the temperature change. The electronic control unit can be adapted to determine the residual wetness in the dryer agent, in particular an adsorbent, and/or estimate the lifetime of the dryer agent and/or detect damage of the dryer agent and/or detect a malfunction of the air dryer device, in particular regarding the control of the air dryer device, based on monitoring the temperature change. Alternatively or additionally, the electronic control unit can be adapted to determine the condensation of water downstream of the dryer agent. It is adapted to detect freezing based on monitoring the temperature change. It is considered that the electronic control unit is adapted to provide a warning signal and/or status information regarding the dryer agent and/or the operational modes, e.g. to a vehicle computer, for example via a commonly used bus, which may be a CAN-Bus. The electronic control unit is adapted to control the inlet flow temperature based on monitoring the temperature change. Thus, monitoring the temperature change as described above provides a plurality of options to monitor and/or control the air dryer device.

Further details, aspects, and embodiments of the invention will be described by way of example with reference to the figures.

Elements in the figures are illustrated for simplicity and clarity and have not necessarily been drawn to scale.
- Figure 1: schematically shows interactions of water in an air stream with a particle of a dryer agent;
- Figure 2: schematically shows an air dryer cartridge for an air dryer device.
- Figure 3: shows the temporal behavior of temperatures measured inside an air dryer cartridge.
- Figure 4: shows a diagram of a method for controlling an air dryer device.

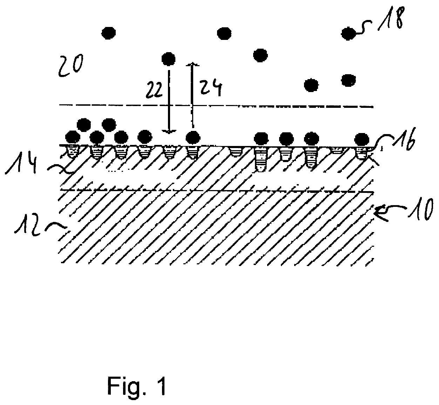

Figure 1 schematically shows the interaction of an air stream 20 containing an adsorbate 18 in the form of water with a dryer agent 10. The dryer agent 10 comprises a solid phase 12 and a boundary surface 14 comprising active sites 16. The active sites 16 can be distributed homogenously (left side of Figure 1) or heterogeneously (right side of Figure 1). The adsorbate 18 reacts with one of the active sites 16. The adsorbate 18 is provided in a gas phase of the air stream 20. In the boundary area, reactions between the active sides and the adsorbate 18 occur. In particular, adsorbate 18 is adsorbed at an active site 16, representing an exothermal reaction which produces heat. Such a reaction is indicated by arrow 22. On the other hand, adsorbate 18 is removed from an active site 16 and enter the air stream 20, undergoing a desorption reaction, which is indicated by arrow 24. This reaction requires energy and is endothermal. Exothermal reactions lead to an increase in temperature of the environment, in particular the dryer agent 10, the adsorbate 18 and the air stream 20. In contrast, endothermal reactions decrease the temperature of the environment. In a situation in which adsorption dominates desorption, e.g., when moist air flows through a dryer agent having adsorbate 10 with relatively high amount of active sides 16 not yet retaining water, an overall increase in temperature occurs. On the other hand, if regeneration is performed on the dryer agent 10 retaining a significant amount of water, desorption is dominant, decreasing the temperature of the environment.

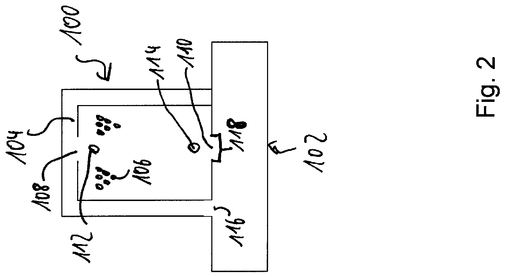

Figure 2 schematically shows an example for an air dryer cartridge 100 arranged on an air dryer device 102, which is not shown in detail. It is considered that the air dryer device 102 comprises the usual components such as a valve housing, a compressor inlet port, which can be connected to a compressor, and an outlet port which may be connected to a consumer system and/or an air storage. The air dryer cartridge 100 comprises a housing 104 containing a dryer agent 106, which in this example is provided in granulate form and may extract moisture from an air stream. A first air port 108 and a second air port 110 are provided in the housing 104. The housing 104 generally is enclosed by an outer housing 105 of the air dryer device 102 or the air dryer cartridge 100. Air may enter or leave the housing 104 through one of the ports 108, 110. In the example shown, the air dryer device 102 is operated in the first operational mode such that an air stream to be dried flows through first air port 108, through the dryer agent 106, and then leaves the housing 104 through the second air port 110 to be guided to an air storage or a consumer system. Thus, the first operational mode is a loading mode. In a second operational mode, the air flow is reversed such that dry air from a consumer system or the air storage may flow through the second air port 110, interacts with the dryer agent 106 to remove moisture and/or water and subsequently leave the housing 104 through the first air port 108. Accordingly, the housing 104 forms a fluid guide connecting the first air port 108 and the second air port 110 and allowing interaction between an air stream and the dryer agent 106. In this example, a first temperature sensor 112 is arranged inside the housing in contact with the dryer agent 106. It may be considered that the first temperature sensor 112 is arranged close to the first air port 108. In particular, it is arranged in the extension of the general flow direction of an air stream flowing through the first air port 108. A second temperature sensor 114 is arranged inside the housing 104 in contact with the dryer agent 106. The second temperature sensor 114 may be arranged close to the second air port 110, preferably in an extension of a flow direction of an air stream going through the second air port 110. The temperature sensors 112, 114 are parts of a temperature sensor device. With this arrangement, it is possible to monitor the temporal behavior of a temperature change at the location of each temperature sensor 112, 114. it is also possible to determine a spatial temperature change showing the change in temperature between the locations of the temperature sensors 112, 114. It should be understood that alternatively or additionally one or more temperature sensors can be arranged in a channel connected to the first air port 108 and/or in a channel connected to the second air port 110. The sensors can be arranged outside of the housing 104 in which the dryer agent 106 is contained. In particular, temperature sensors can be arranged in corresponding channels outside of the air cartridge, but preferably inside the air dryer device 102, such that they can be exchanged separately from the air dryer cartridge. In particular, a temperature sensor can be arranged at or close to a connection port 116 and/or 118, which provide fluid connections between the air dryer cartridge 100 and the valve housing of air dryer device 102. Generally, the temperature sensors 112, 114 are connected to an electronic control unit via a wireless connection, e.g. a radio connection.

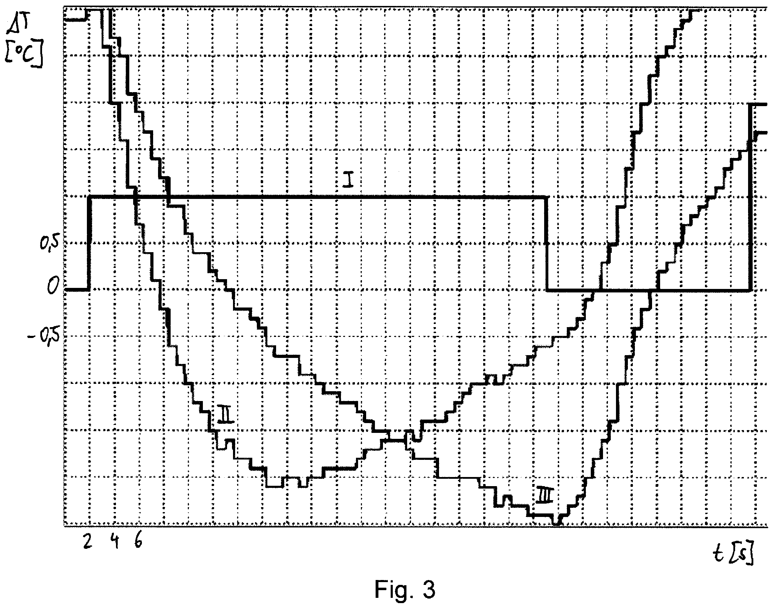

Figure 3 shows an example of the temporal behavior of the temperature in different operational modes in an air dryer cartridge as shown in Figure 2. The x-axis corresponds to time, whereas the vertical y-axis corresponds to the measured temperature. The steps on the x-axis correspond to 2 seconds, whereas the steps on the y-axis correspond to 0.5 degrees Celsius. It should be noted that the temperature has been normalized to 0, as the change in temperature is of relevance, but not the absolute value of the temperature. Graph I represents the state of the air dryer device. At second 2, a regeneration mode is started which roughly lasts until second 39. After this regeneration mode, the air dryer device is put into the loading mode in which air to be dried is provided by a compressor. The different operational modes are indicated by the step-like structure of graph I. Graph II represents the temperature measured at temperature sensor 114 of Figure 2 in the lower region of housing 100, close to the second air port 110. Graph III represents the temperature as measured by temperature sensor 112 arranged close to first port 108 in Figure 2 in the upper region of port 114. As can be seen, when the regeneration mode is started, the temperature measured at temperature sensors 112, 114 drops due to desorption, which requires heat. The drop in temperature continues until equilibrium is reached. As can be seen from the figure, if the regeneration mode is still performed after equilibrium is reached, the temperature starts to rise again. This is due to the effect that the impact of the air stream leads to friction and heats the dryer agent. It can be seen from Figure 3 that there is a significant delay between the behavior close to the second air port 110 and that close to the first air port 108. This is due to dry air entering the housing close to the second air port 110 being able to quickly regenerate the lower region. However, the air takes on moisture and thus is not able to dry the upper region close to sensor 112 as effectively until the lower region reaches its equilibrium. Therefore, the regeneration of the upper region, or more generally, the region further away from the second air port 110, is delayed in comparison to the lower region. In the example shown in Figure 3, regeneration was interrupted before the upper part around first temperature sensor 112 was completely regenerated due to low pressure in the air storage used for regeneration. After regeneration, the load mode starts with a reverse effect. Air to be dried enters the air dryer cartridge through first air port 108 with which it interacts such that moisture and water in the air is adsorbed. This leads to an increase in temperature. As the uppermost part of the dryer agent is in contact with moist air earlier than the lowermost part around second temperature sensor 112, the temperature increase around the first temperature sensor 110 is more pronounced. It can be easily seen that a good criterion for stopping regeneration is when the direction of a temperature change during a regeneration mode stalls or changes from a decrease to an increase, indicating that no further significant desorption or removal of moisture from a dryer agent may be expected. Analogously, when deciding whether regeneration has to be performed, a change in the direction of the temperature change indicates that the dryer agent is saturated or has reached equilibrium and cannot efficiently dry an air stream without regeneration. Generally, the electronic control unit is adapted to end a regeneration mode if the last of the temperature sensors indicates that saturation or equilibrium has been (locally) reached, in particular if no interrupting event like an inadmissible drop of pressure occurs. Also, the electronic control unit is adapted to end a loading mode if the first or several, but not all, sensors indicate that saturation or equilibrium has been (locally) reached.

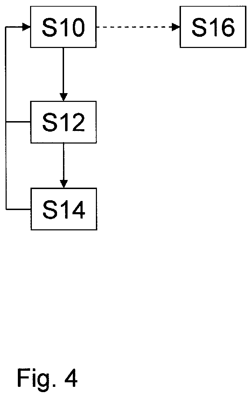

Figure 4 shows a flow diagram of a method of controlling an air dryer device. In a first step S10, a spatial and/or temporal temperature change due to an interaction between an air stream and a dryer agent is monitored, e.g., by a temperature sensor device providing corresponding signals to an electronic control unit. Based on this monitoring, in a step S12 an electronic control unit determines if a saturation or equilibrium is reached at least locally, e.g., by determining whether a local minimum or maximum of the temperature is reached, as shown, for example, in Fig. 3. If saturation or maximum is reached, in a step S14 the electronic control unit controls the air dryer unit to switch its operational mode. From there, it can be returned to step S10. Otherwise, it is directly returned to step S10. In a parallel step S16, the operational status of the air dryer device is monitored based on the signals of the temperature sensor device. In particular, it is monitored whether the air dryer device or one of its valve components malfunction or freezing occurs by monitoring the behavior of the temperature change and, if suitable, to compare it with calibration data indicating an expected behavior under given conditions. It should be understood that step S16 does not have to be performed in parallel, but could be included into the steps S10 to S14.

The features of the invention disclosed in this description, the figures and the claims may be relevant for implementing the invention individually as well as in any combination.

### List of reference numerals

- 10: Dryer agent
- 12: Solid phase
- 14: Boundary surface
- 16: Active sites
- 18: Adsorbate
- 20: Air stream
- 22: Adsorption
- 24: Desorption

- 100: Air dryer cartridge
- 102: Air dryer device
- 104: Housing
- 106: Dryer agent
- 108: First air port
- 110: Second air port
- 112: First temperature sensor
- 114: Second temperature sensor
- 116: Connection port
- 118: Connection port

## Claims

1. Air dryer device (102), in particular for a vehicle, comprising
an air dryer cartridge (100) with a housing (104), the housing (104) containing a dryer agent (106);
a first air port (108, 116) providing fluid connection to the housing (104);
a second air port (110, 118) providing fluid connection to the housing (104);
the air dryer cartridge (100) comprising a fluid guide providing a fluid connection between the first air port (108, 116) and the second air port (110, 118), the fluid guide being arranged to allow interaction between an air stream flowing through the fluid guide and the dryer agent (106);
wherein the air dryer device (102) further comprises a temperature sensor device (112, 114) adapted to monitor a temperature change due to an interaction between the air stream and the dryer agent (106),
wherein the temperature sensor device (112, 114) comprising at least one temperature sensor arranged in the housing (104) and/or in contact with dryer agent and/or in the path of the air stream entering or leaving the first air port (108, 116) and/or the second air port (110, 118) and/or in contact with the housing (104);
wherein the air dryer device (102) comprises an electronic control unit that is connected to the temperature sensor device (112, 114);
wherein the electronic control unit is adapted to control the air dryer device (102);
wherein the electronic control unit is further adapted to monitor the temporal and/or spatial change of temperature due to the interaction between the air stream and the dryer agent (106) based on signals from the temperature sensor device (112, 114);
wherein the electronic control unit is adapted to switch the air dryer device (102) between a first operational mode defined by an airflow from the first air port (108, 116) to the second air port (110, 118) and a second operational mode defined by an air flow from the second air port (110, 118) to the first air port (108, 116);
wherein the electronic control unit is adapted to receive a signal indicating an outside temperature and control the air dryer device based on the outside temperature, wherein the outside temperature represents an environmental temperature that is measured by a corresponding temperature sensor;
wherein the electronic control unit is adapted to switch between the first operational mode and the second operational mode based on a direction or a sign of the monitored temperature change;
wherein the electronic control unit is adapted to receive calibration data from a connected storage;
wherein the calibration data pertains to the behaviour of the temperature change that is expected under different outside temperatures;
**characterized in that** the electronic control unit is adapted to monitor whether a freezing of the air dryer device occurs by comparing the monitored temperature change with the calibration data.

## Patentansprüche

1. Lufttrocknervorrichtung (102), insbesondere für ein Fahrzeug, umfassend:
einen Lufttrocknereinsatz (100) mit einem Gehäuse (104), wobei das Gehäuse (104) ein Trocknungsmittel (106) enthält,
einen ersten Luftanschluss (108, 116), der eine Fluidverbindung mit dem Gehäuse (104) vorsieht,
einen zweiten Luftanschluss (110, 118), der eine Fluidverbindung mit dem Gehäuse (104) vorsieht,
wobei der Lufttrocknereinsatz (100) eine Fluidführung umfasst, die eine Fluidverbindung zwischen dem ersten Luftanschluss (108, 116) und dem zweiten Luftanschluss (110, 118) vorsieht, wobei die Fluidführung so angeordnet ist, dass sie eine Wechselwirkung zwischen einem durch die Fluidführung fließenden Luftstrom und dem Trocknungsmittel (106) ermöglicht,
wobei die Lufttrocknervorrichtung (102) ferner eine Temperaturfühlervorrichtung (112, 114) umfasst, die geeignet ist, eine Temperaturänderung auf Grund einer Wechselwirkung zwischen dem Luftstrom und dem Trocknungsmittel (106) zu überwachen,
wobei die Temperaturfühlervorrichtung (112, 114) wenigstens einen Temperaturfühler umfasst, der in dem Gehäuse (104) und/oder in Kontakt mit dem Trocknungsmittel und/oder in dem Pfad des in den ersten Luftanschluss (108, 116) und/oder den zweiten Luftanschluss (110, 118) eintretenden oder diesen verlassenden Luftstroms und/oder in Kontakt mit dem Gehäuse (104) angeordnet ist,
wobei die Lufttrocknervorrichtung (102) eine elektronische Steuereinheit umfasst, die mit der Temperaturfühlervorrichtung (112, 114) verbunden ist,
wobei die elektronische Steuereinheit geeignet ist, die Lufttrocknervorrichtung (102) zu steuern,
wobei die elektronische Steuereinheit ferner geeignet ist, die zeitliche und/oder räumliche Änderung der Temperatur auf Grund der Wechselwirkung zwischen dem Luftstrom und dem Trocknungsmittel (106) auf Grundlage von von der Temperaturfühlervorrichtung (112, 114) kommenden Signalen zu überwachen,
wobei die elektronische Steuereinheit geeignet ist, die Lufttrocknervorrichtung (102) zwischen einer ersten Betriebsart, die durch einen von dem ersten Luftanschluss (108, 116) zu dem zweiten Luftanschluss (110, 118) fließenden Luftstrom festgelegt ist, und einer zweiten Betriebsart, die durch einen von dem zweiten Luftanschluss (110, 118) zu dem ersten Luftanschluss (108, 116) fließenden Luftstrom festgelegt ist, umzuschalten,
wobei die elektronische Steuereinheit geeignet ist, ein Signal zu empfangen, das eine Außentemperatur anzeigt, und die Lufttrocknervorrichtung auf Grundlage der Außentemperatur zu steuern, wobei die Außentemperatur eine Umgebungstemperatur darstellt, die durch einen entsprechenden Temperaturfühler gemessen wird,
wobei die elektronische Steuereinheit geeignet ist, auf Grundlage einer Richtung oder eines Anzeichens der überwachten Temperaturänderung zwischen der ersten Betriebsart und der zweiten Betriebsart umzuschalten,
wobei die elektronische Steuereinheit geeignet ist, Kalibrierdaten von einem angeschlossenen Speicher zu empfangen,
wobei die Kalibrierdaten das Verhalten der Temperaturänderung betreffen, die unter unterschiedlichen Außentemperaturen zu erwarten ist,
**dadurch gekennzeichnet, dass** die elektronische Steuereinheit geeignet ist, durch Vergleichen der überwachten Temperaturänderung mit den Kalibrierdaten zu überwachen, ob ein Einfrieren der Lufttrocknervorrichtung erfolgt.

## Revendications

1. Dispositif (102) à sécheur d'air, en particulier pour un véhicule, comprenant
une cartouche (100) de sécheur d'air ayant un boîtier (104), le boîtier (104) contenant un agent (106) dessiccateur;
un premier orifice (108, 116) pour de l'air procurant une communication pour du fluide vers le boîtier (104);
un deuxième orifice (110, 118) pour de l'air procurant une communication pour du fluide vers le boîtier (104);
la cartouche (100) de sécheur d'air comprenant une conduite pour du fluide procurant une communication pour du fluide entre le premier orifice (108, 116) pour de l'air et le deuxième orifice (110, 118) pour de l'air, la conduite pour du fluide étant agencée pour permettre une interaction entre un courant d'air passant dans la conduite pour du fluide et l'agent (106) dessiccateur;
dans lequel le dispositif (102) à sécheur d'air comprend en outre un dispositif (112, 114) à sonde de température, propre à contrôler un changement de température dû à une interaction entre le courant d'air et l'agent (106) dessiccateur,
dans lequel le dispositif (112, 114) à sonde de température comprend au moins une sonde de température disposée dans le boîtier (104) et/ou en contact avec l'agent dessiccateur et/ou dans le trajet du courant d'air entrant ou quittant le premier orifice (108, 116) pour de l'air et/ou le deuxième orifice (110, 118) pour de l'air et/ou en contact avec le boîtier (104);
dans lequel le dispositif (102) à sécheur d'air comprend une unité électronique de commande, qui est reliée au dispositif (112, 114) à sonde de température;
dans lequel l'unité électronique de commande est conçue pour commander le dispositif (102) à sécheur d'air;
dans lequel l'unité électronique de commande est conçue en outre pour contrôler le changement temporel et/ou spatial de température dû à l'interaction entre le courant d'air et l'agent (106) dessiccateur sur la base de signaux provenant du dispositif (112, 114) à sonde de température;
dans lequel l'unité électronique de commande est conçue pour commuter le dispositif (102) à sécheur d'air entre un premier mode de fonctionnement défini par un courant d'air du premier orifice (108, 116) pour de l'air au deuxième orifice (110, 118) pour de l'air et un deuxième mode de fonctionnement défini par un courant d'air du deuxième orifice (110, 118) pour de l'air au premier orifice (108, 116) pour de l'air;
dans lequel l'unité électronique de commande est conçue pour recevoir un signal indiquant une température extérieure et commander le dispositif à sécheur d'air sur la base de la température extérieure, la température extérieure représentant une température ambiante, qui est mesurée par une sonde de température correspondante;
dans lequel l'unité électronique de commande est conçue pour commuter entre le premier mode de fonctionnement et le deuxième mode de fonctionnement, sur la base d'un sens ou d'un signe du changement de température contrôlé;
dans lequel l'unité électronique de commande est conçue pour recevoir une donnée d'étalonnage d'une mémoire connectée;
dans lequel la donnée d'étalonnage appartient au comportement du changement de température, qui est escompté, à des températures extérieures différentes;
**caractérisé en ce que** l'unité électronique de commande est conçue pour contrôler si un givrage du dispositif à sécheur d'air se produit, en comparant le changement de température contrôlé à la donnée d'étalonnage.
